# EUROPÄISCHE PATENTANMELDUNG

(11) **EP 1 739 693 A1**
(43) Veröffentlichungstag der Anmeldung: **03.01.2007**
(21) Anmeldenummer: 06012522.6
(22) Anmeldetag: 19.06.2006
(51) Int. Cl.: H01B 13/14, B29C 37/00, B29C 47/02

(54) **Verfahren und Vorrichtung zur Herstellung von elektrischen Leitern mit einer Ummantelung**

(30) Priorität: 01.07.2005 DE 102005031222
(71) Anmelder: Troester GmbH & Co.KG, D-30519 Hannover (DE)
(72) Erfinder: Pielsticker, Bernd, 31157 Sarstedt (DE)
(74) Vertreter: Scheffler, Jörg

(57) **Zusammenfassung**

Die Erfindung betrifft ein Verfahren und eine Vorrichtung zur Herstellung von elektrischen Leitern, insbesondere stromführenden Leitungen, die mit einer Ummantelung aus einem thermoplastischen Werkstoff ausgestattet sind. Hierzu wird ein Spritzkopf mit einem den Außenumfang des Leiters bestimmenden Durchlass eingesetzt. Um ein einfaches Verfahren zur Herstellung von elektrischen Leitern mit unterschiedlichen Außenumfängen oder Querschnittsformen zu schaffen, ist der Durchlass zur Einstellung eines abweichenden Außenumfanges des Leiters während des Produktionsprozesses variabel einstellbar.

## Beschreibung

Die Erfindung betrifft ein Verfahren zur Herstellung von elektrischen isolierten Leitern, insbesondere stromführenden Leitungen, mit einer Ummantelung aus einem oder mehren thermoplastischen Werkstoffen, wobei der Leiter von einem, ein gasförmiges Medium mittels einer Enddichtung dichtend einschließenden rohrförmigen Hüllkörper umschlossen wird. Weiterhin betrifft die Erfindung eine Vorrichtung zur Herstellung solcher elektrischer Leiter.

Der Dimensionswechsel bei der Extrusion von elektrischen Leitern erfordert in der Praxis derzeit einen erheblichen Zeitaufwand. Hierzu wird die Fertigungslinie vollständig gestoppt und dadurch die Produktion unterbrochen. Unter hohem Personal- und Arbeitsaufwand erfolgt dann eine Umrüstung und ein Austausch des den Durchlass aufweisenden Spritzkopfeinsatzes sowie der die Ummantelungsschichten bestimmenden Spritzwerkzeuge, die unter Umständen zuvor eigens hergestellt werden müssen. Die Wiederaufnahme des Produktionsprozesses ist dadurch mit einem hohen Ausschuss verbunden. Eine flexible Fertigung solcher Leiter ist daher in der Praxis kaum möglich.

Die Eigenschaften der elektrischen Leiter werden dabei maßgeblich durch die chemische Vernetzung bestimmt, die im Inneren des hierzu mit einem gasförmigen Medium, insbesondere einem Inertgas wie Stickstoff oder einem Sattdampf, gefüllten rohrförmigen Hüllkörper erfolgt. Die Vernetzung erfolgt vorzugsweise bei Drücken bis zu 25 bar. Ja nach Kabelgewicht findet die Herstellung der Leiter oder Adern auf Anlagen mit einer einer horizontalen, vertikalen, geneigten oder einer Kettenlinie folgenden Ausrichtung des Hüllkörpers statt.

Durch die WO 01/95345 A1 sind auch bereits elektrische Kabel bekannt, deren isolierende Ummantelung über die Länge des Kabel variiert. Auf diese Weise wird eine an die jeweils erforderliche elektrische Isolierung angepasste Ummantelung erreicht, um so die Baugröße, beispielsweise bei Wicklungen zu verringern und die Funktion der daraus hergestellten Bauteile zu optimieren.

Weiterhin bezieht sich auch die US 52 83 392 A auf eine elektrische Stromkabelleitung, insbesondere ein elektrisches Stromkabel, welches in der Betriebszuverlässigkeit durch Vergrößerung der dielektrischen Stärke seiner geraden Verbindungen und Anschlussenden verbessert ist, indem die Isolierschicht an zwei Endabschnitten eines jeden Kabels vergrößert ist.

Außerdem bezieht sich die DE-PS 578 997 auf eine Leitung, bei der Verdickungen der Isolierung zugleich als Zugentlastung nutzbar sind.

Es sind ferner durch DE 103 15 125 B3, DE 103 37 533 A1, DE 103 24 475 A1 sowie DE 103 23 543 A1 Kalibiereinrichtungen zur Kalibrierung von extrudierten Rohren bekannt, die aus einer Vielzahl von aus einzelnen Segmenten bestehenden hintereinander angeordneten Segmentkörpern bestehen. Mehrere in Axialrichtung hintereinander liegende Segmente sind zu einem Segmentblock zusammengefasst, der jeweils in dem Gehäuse radial verstellbar gehalten ist.

Außerdem ist auch durch die DE 20 2004 006 793 U1 eine Vorrichtung zur Herstellung von Hohlsträngen aus thermoplastischen Material bekannt, wobei das Format des Hohlstranges mittels eines einstellbaren Durchtrittsspaltes und einer sich daran anschließenden, den Außendurchmessers des Hohlstranges bestimmenden Kalibriereinheit einstellbar ist. Hierzu hat das Werkzeug einen Dorn, der gegenüber dem ihn umgebenden Mantel relativ verstellbar ist, wobei dessen Dornkopf kippbeweglich ist.

Der Erfindung liegt die Aufgabe zugrunde, ein einfaches Verfahren zur Herstellung von elektrischen Leitern mit unterschiedlichen Außenumfängen oder Querschnittsformen zu schaffen. Weiterhin liegt der Erfindung die Aufgabe zugrunde, eine Vorrichtung zur Herstellung solcher elektrischer Leiter zu schaffen.

Die erstgenannte Aufgabe wird erfindungsgemäß mit einem Verfahren gemäß den Merkmalen der Ansprüche 1 und 3 gelöst. Die Unteransprüche 2 und 4 bis 8 betreffen besonders zweckmäßige Weiterbildungen der Erfindung.

Erfindungsgemäß ist also ein Verfahren vorgesehen, bei dem der zumindest eine Durchlass des Ein- oder Mehrlagen-Spritzkopfes zur Einstellung abweichender Leiterdurchmesser oder Schichtdicken während des Produktionsprozesses verändert wird. Hierdurch wird es erstmals möglich, eine flexible Fertigung unterschiedlicher elektrischer Leiter zu realisieren, ohne dass hierzu die nach dem Stand der Technik erforderliche Umrüstung des Spritzkopfes und der Enddichtung erforderlich ist. Dabei wird zudem ein unerwünschter Materialverlust ebenso wie die Lagerhaltung für Spritzkopfeinsätze mit dem jeweils erforderlichen Durchlass und Enddichtungen vermieden, zwischen denen der als CV-Rohr zur kontinuierlichen Vulkanisation ausgeführte Hüllkörper den Leiter einschließt.

Die Anpassung des Durchlasses an das gewünschte Produkt kann im Stillstand der Vorrichtung erfolgen. Besonders vorteilhaft ist es hingegen, wenn der Durchlass ohne Unterbrechung oder Verzögerung der Produktion verändert wird, so dass insbesondere ein Zeitverlust vermieden werden kann. Ein möglicher Produktionsausfall ist dabei auf die Stellzeit eines den Durchlass verändernden Stellgliedes zum Erreichen der vorbestimmten Position beschränkt.

Gemäß einer weiteren ebenfalls besonders Erfolg versprechenden Abwandlung wird der Durchlass stufenlos kontinuierlich verändert, um so einerseits jedes gewünschte Maß herstellen zu können, andererseits einen kontinuierlichen Materialfluss und unterbrechungsfreien Produktionsprozess sicherzustellen.

Besonders praxisgerecht ist es auch, wenn die den ummantelten elektrischen Leiter aufnehmende Enddichtung mit einem Durchlass ausgestattet ist, der entsprechend dem äußeren Durchlass des Spritzkopfes verändert wird, wobei die den Einlass begrenzende Enddichtung gegenüber dem Durchlass zeitversetzt eingestellt wird. Hierdurch kann der Materialverlust auf ein Minimum reduziert werden, indem der Durchlass der Enddichtung entsprechend der Durchlaufzeit des Leiters zwischen dem Durchlass des Spritzkopfes und dem Durchlass der Enddichtung zeitversetzt verändert wird. Insbesondere wird dadurch ein Materialverlust auf der Länge des als CV-Rohr zur kontinuierlichen Vulkanisation ausgeführten Hüllkörpers vermieden.

Grundsätzlich kann der Außenumfang des isolierten Leiters oder der Ader während des Produktionsprozesses verändert werden, um so beispielsweise dem Anwendungszweck über die Länge des Leiters angepasste Isoliereigenschaften zu erreichen. Besonders praxisgerecht ist es hingegen, wenn der mit einer Ummantelung ausgestattete Leiter oder die Ader mit einem konstanten Durchmesser hergestellt wird.

Die zweitgenannte Aufgabe, eine Vorrichtung zur Herstellung von elektrischen isolierten Leitern, insbesondere stromführenden Leitungen, mit einer Ummantelung aus einem oder mehren thermoplastischen Werkstoffen zu schaffen, wobei die Vorrichtung einen Ein- oder Mehrlagen-Spritzkopf mit zumindest einem den Außenumfang des Leiters bestimmenden, jeweils einem oder mehreren ringförmigen Austrittquerschnitten zugeordneten Durchlass aufweist, welcher eine jeweilige Querschnittfläche der Ummantelungsschichten bestimmt, wobei der Leiter in einem Bereich zwischen dem Ein- oder Mehrlagen-Spritzkopf und einer mittels eines Durchlasses einer Enddichtung von einem, ein gasförmiges Medium dichtend einschließenden rohrförmigen Hüllkörper umschlossen ist, wird erfindungsgemäß dadurch erreicht, dass der Durchlass einstellbar ist, insbesondere also eine oder mehrere einstellbare Durchlassöffnungen aufweist. Hierdurch wird es erstmals möglich, nahezu beliebige Durchlassöffnungen innerhalb kurzer Zeit, insbesondere auch mittels einer zentralen Steuereinheit einzustellen. Dabei ist einerseits der Umfang, andererseits auch die Querschnittsfläche oder Querschnittsform einstellbar.

Der Durchlass könnte flexibel verformbar und mittels eines Stellgliedes einstellbar ausgeführt sein. Besonders praxisgerecht ist es hingegen, wenn zumindest eine Durchlassöffnung bewegliche, einstellbare gegen die Außenumfänge des Leiters und der Schichten anlegbare Anlagekörper aufweist. Hierdurch wird eine einfache Einstellbarkeit mittels der an die Formgebungseigenschaften angepassten Oberflächenbeschaffenheit der Anlagekörper erreicht, die hierzu beispielsweise nach dem Prinzip einer Irisblende einstellbar sind.

Beispielsweise kann ein solcher einstellbarer Durchlass mittels mehrerer am Umfang angeordneter, radial beweglicher Segmente erreicht werden, die insbesondere mit einer gegen den Umfang anlegbaren Manschette, insbesondere einem Faltenbalg, verbunden sind, um auf diese Weise die Dichtungswirkung zu verbessern. Weiterhin könnte ein ringförmig geschlossenes Element, ähnlich einer Schlauchschelle vorgesehen werden, welches mittels eines Stellgliedes stufenlos einstellbar ist. Außerdem könnte der Durchlass mittels eines den Umfang einschließenden Gitters, dessen einander kreuzende Gitterstäbe zur Einstellung des gewünschten Umfanges relativ zueinander schwenkbeweglich sind, eingeschlossen werden.

Weiterhin können die Anlagekörper elastisch verformbar sein, um so eine optimale Anpassung an die gewünschte Kontur zu erreichen und insbesondere stetige Übergänge zwischen benachbarten Anlagekörpern realisieren zu können.

Dabei ist es besonders sinnvoll, wenn die Anlagekörper einander überdeckend angeordnet sind. Hierdurch wird eine unerwünschte Abbildung der Trennstelle als Nahtlinie vermieden.

Eine andere, ebenfalls besonders vorteilhafte Ausführungsform der vorliegenden Erfindung wird dadurch erreicht, dass der Bereich zwischen dem Spritzkopf und der Enddichtung durch ein von dem Hüllkörper eingeschlossenes gasförmiges Medium mit einem Überdruck zwischen 5 bar und 15 bar, insbesondere 10 bar, beaufschlagt wird. Hierdurch wird eine optimale Oberflächenbeschaffenheit der Ader sichergestellt. Der Spritzkopf und die Enddichtung können dabei in unterschiedlichen Ebenen angeordneten sein, so dass der Leiter eine geneigte Orientierung einnimmt und insbesondere einer Kettenlinie folgt.

Weiterhin erweist es sich als besonders zweckmäßig, wenn der Durchlass sowie die Enddichtung mittels einer Steuereinheit synchron oder zeitversetzt einstellbar sind, um so die Enddichtung derart zeitlich verzögert zu verändern, dass das im Bereich zwischen dem Spritzkopf und der Enddichtung befindliche Leitermaterial uneingeschränkt verwendet werden kann. Der kontinuierliche Produktionsprozess wird dabei nicht unterbrochen.

## Patentansprüche

1. Verfahren zur Herstellung von elektrischen isolierten Leitern, insbesondere stromführenden Leitungen, mit einer Ummantelung aus einem oder mehren thermoplastischen Werkstoffen mittels eines Ein- oder Mehrlagen-Spritzkopfes mit zumindest einem den Außenumfang des Leiters bestimmenden, jeweils einem oder mehreren ringförmigen Austrittquerschnitten zugeordneten Durchlass, welcher eine jeweilige Querschnittfläche der Ummantelungsschichten bestimmt, wobei der Leiter in einem Bereich zwischen dem Ein- oder Mehrlagen-Spritzkopf und einer Enddichtung von einem, ein gasförmiges Medium dichtend einschließenden rohrförmigen Hüllkörper umschlossen wird, **dadurch gekennzeichnet, dass** der zumindest eine Durchlass des Ein- oder Mehrlagen-Spritzkopfes zur Einstellung abweichender Leiterdurchmesser und/oder Schichtdicken während des Produktionsprozesses verändert wird.

2. Verfahren nach Anspruch 1, **dadurch gekennzeichnet, dass** die im Endbereich des rohrförmigen Hüllkörper gegen den Überdruck des gasförmigen Mediums abdichtende Enddichtung variabel an den jeweiligen Außendurchmesser des mit der Ummantelung versehenen Leiters angepasst wird.

3. Verfahren zur Herstellung von elektrischen isolierten Leitern, insbesondere stromführenden Leitungen, mit einer Ummantelung aus einem oder mehren thermoplastischen Werkstoffen, wobei der Leiter von einem, ein gasförmiges Medium mittels einer Enddichtung dichtend einschließenden rohrförmigen Hüllkörper umschlossen wird, **dadurch gekennzeichnet, dass** die Enddichtung mittels eines einstellbaren Durchlasses variabel an den jeweiligen Außendurchmesser des mit der Ummantelung versehenen Leiters angepasst wird.

4. Verfahren nach zumindest einem der vorhergehenden Ansprüche, **dadurch gekennzeichnet, dass** der zumindest eine Durchlass ohne Unterbrechung und/oder Verzögerung der Produktion verändert wird.

5. Verfahren nach zumindest einem der vorhergehenden Ansprüche, **dadurch gekennzeichnet, dass** der zumindest eine Durchlass stufenlos verändert wird.

6. Verfahren nach zumindest einem der vorhergehenden Ansprüche, **dadurch gekennzeichnet, dass** der zumindest eine Durchlass kontinuierlich verstellt wird.

7. Verfahren nach zumindest einem der vorhergehenden Ansprüche, **dadurch gekennzeichnet, dass** die Enddichtung gegenüber dem Durchlass zeitversetzt eingestellt wird.

8. Verfahren nach zumindest einem der vorhergehenden Ansprüche, **dadurch gekennzeichnet, dass** der mit einer Ummantelung ausgestattete Leiter mit einem konstanten Durchmesser hergestellt wird.

9. Vorrichtung zur Herstellung von elektrischen isolierten Leitern, insbesondere stromführenden Leitungen, mit einer Ummantelung aus einem oder mehren thermoplastischen Werkstoffen, wobei die Vorrichtung einen Ein- oder Mehrlagen-Spritzkopf mit zumindest einem den Außenumfang des Leiters bestimmenden, jeweils einem oder mehreren ringförmigen Austrittquerschnitten zugeordneten Durchlass aufweist, welcher eine jeweilige Querschnittfläche der Ummantelungsschichten bestimmt, wobei der Leiter in einem Bereich zwischen dem Ein- oder Mehrlagen-Spritzkopf und einer Enddichtung von einem, ein gasförmiges Medium dichtend einschließenden rohrförmigen Hüllkörper umschlossen ist, **dadurch gekennzeichnet, dass** der zumindest eine Durchlass des Ein- oder Mehrlagen-Spritzkopfes zur Einstellung abweichender Leiterdurchmesser und/oder Schichtdicken insbesondere während des Produktionsprozesses veränderbar ist.

10. Vorrichtung zur Herstellung von elektrischen isolierten Leitern, insbesondere stromführenden Leitungen, mit einer Ummantelung aus einem oder mehren thermoplastischen Werkstoffen, wobei der Leiter von einem, ein gasförmiges Medium mittels einer Enddichtung dichtend einschließenden rohrförmigen Hüllkörper umschlossen ist, **dadurch gekennzeichnet, dass** die Enddichtung einen einstellbaren Durchlass zur variablen Anpassung an den jeweiligen Außendurchmesser des mit der Ummantelung versehenen Leiters aufweist.

11. Vorrichtung nach Anspruch 9 oder 10, **dadurch gekennzeichnet, dass** der zumindest eine Durchlass beweglich einstellbare gegen den Außenumfang des Leiters anlegbare Anlagekörper aufweist.

12. Vorrichtung nach zumindest einem der Ansprüche 9 bis 11, **dadurch gekennzeichnet, dass** die Anlagekörper elastisch verformbar sind.

13. Vorrichtung nach zumindest einem der Ansprüche 9 bis 12, **dadurch gekennzeichnet, dass** die Anlagekörper einander überdeckend angeordnet sind.

14. Vorrichtung nach zumindest einem der Ansprüche 9 bis 13, **dadurch gekennzeichnet, dass** der Durchlass sowie die Enddichtung mittels einer Steuereinheit synchron und/oder zeitversetzt einstellbar sind.
